Europäisches Patentamt

European Patent Office

Office européen des brevets

(11) Publication number: **0 497 409 A1**

# EUROPEAN PATENT APPLICATION

(21) Application number: **92200178.9**

(22) Date of filing: **23.01.92**

(51) Int. Cl.⁵: **B62D 7/22**

(30) Priority: **28.01.91 BE 9100069**

(43) Date of publication of application:
**05.08.92 Bulletin 92/32**

(84) Designated Contracting States:
**AT BE CH DE ES FR GB IT LI LU NL SE**

(71) Applicant: **VOLVO CAR SINT-TRUIDEN,
naamloze vennootschap
Rellestraat 2
B-3800 Sint-Truiden(BE)**

(72) Inventor: **Kester, Wim
Speeldries 4
NL-5521 GG Eersel(NL)**

(74) Representative: **Donné, Eddy
Bureau M.F.J. Bockstael nv Arenbergstraat
13
B-2000 Antwerpen(BE)**

(54) **Steering gear for vehicles.**

(57) Steering-gear for vehicles, characterized in that at the height of the steering shaft (6) a friction device (14) has been installed consisting of at least two cooperating friction elements (15,16) of which one has been locked to keep it from turning and the other turns in conjunction with the steering shaft (6) and whereby at least one of said friction elements (15,16) has a contact area (17) which mainly consists of a synthetic-based material.

Fig. 9

The present invention concerns a steering-gear for vehicles.

It is known that in vehicles the road bumps can be felt at the steering wheel. When these road bumps come through very strongly, they create a feeling of a certain nervous steering, and this in proportion to the vehicle speed.

This adverse effect is especially noticed in vehicles with front-wheel drive, and in vehicles in which a steering-gear with a steering rack with variable gear teeth is used.

In the first case said disadvantage is increased as the front wheels of vehicles with front-wheel drive are usually more heavily loaded.

In order to make a too heavy load on the steering axle be felt less when parking the vehicle, use can be made as mentioned above of a steering rack with a variable transmission ratio. This is specific in that the geometry of the gear teeth, and in particular the direction and the pressure angle of the gear teeth are variable as one moves from the centre of the steering rack to the extreme positions.

This specific gear teeth geometry has a positive influence on the parking forces to be executed, but is disadvantageous in that road bumps are felt more strongly at the steering wheel when driving.

Also, the present invention aims a steering-gear whereby the influence from road bumps on the steering-wheel is minimized.

According to the invention use is made of a device which causes an additional friction in the steering-gear, whereby said friction has an almost constant value during the complete life span of the vehicle.

The invention also aims a steering-gear whereby the friction device has been built-in such that it can easily be dismounted in case of a defect, or in case a friction device with other features needs to be installed.

Moreover, the invention aims a steering-gear which has a friction device for which the so-called "stick-slip" behaviour, in other words the increased friction to overcome at the transition from standstill to motion, is practically non-existing.

To this end, the invention concerns a steering-gear for vehicles, characterized in that a friction device has been installed at the height of the steering shaft which consists of at least two cooperating friction elements of which one has been locked to keep it from turning and the other turns in conjunction with the steering shaft and whereby at least one of these friction elements shows a contact area which mainly consists of a synthetic-based material.

In preference said synthetic material also contains fine parts of a product based on metal.

However, one of the friction elements has preferably a metal contact area.

In order to better explain the characteristics according to the invention, the following preferred embodiment is described as an example only and without being limitative in any way with reference to the accompanying drawings, where:

figure 1 shows the steering-gear according to the invention;

figure 2 is a schematic representation of a steering rack with variable transmission ratio;

figure 3 shows a cross-section according to line III-III in figure 2;

figures 4 and 5 are a schematic representation of the interconnection between the pinion and the steering rack, respectively at the positions indicated in figure 2 with F4 and F5;

figure 6 shows the movement of the cross rod as a function of the angular rotation of the steering wheel for a steering-gear which uses a steering rack with a corresponding pinion;

figure 7 shows the coupling to be executed as a function of the angular rotation of the steering wheel for a steering-gear which uses a steering rack with a corresponding pinion;

figure 8 shows a view according to arrow F8 in figure 1;

figure 9 shows a cross-section of the part indicated in

figure 8 with F9, but to a larger scale;

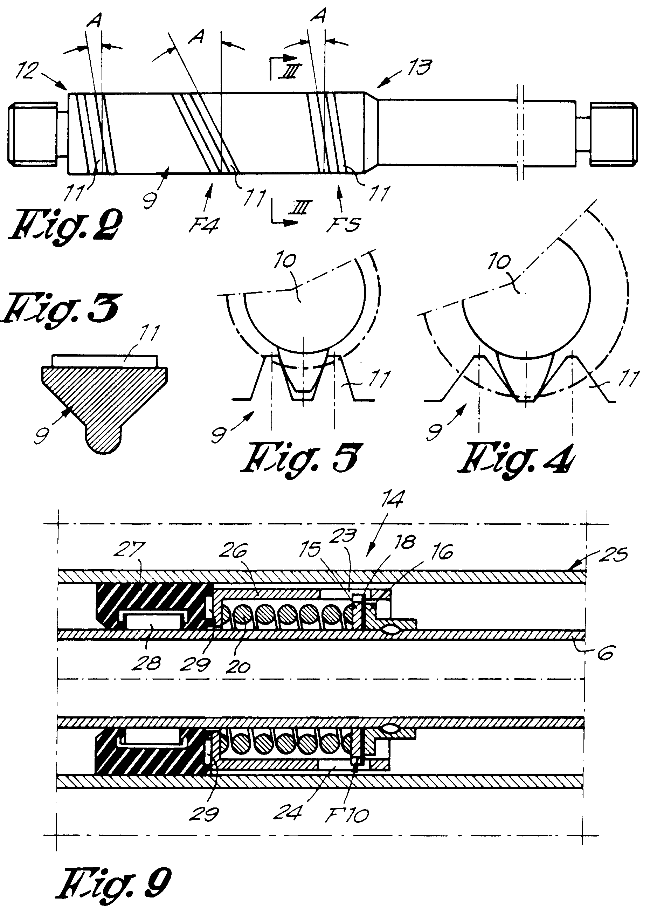

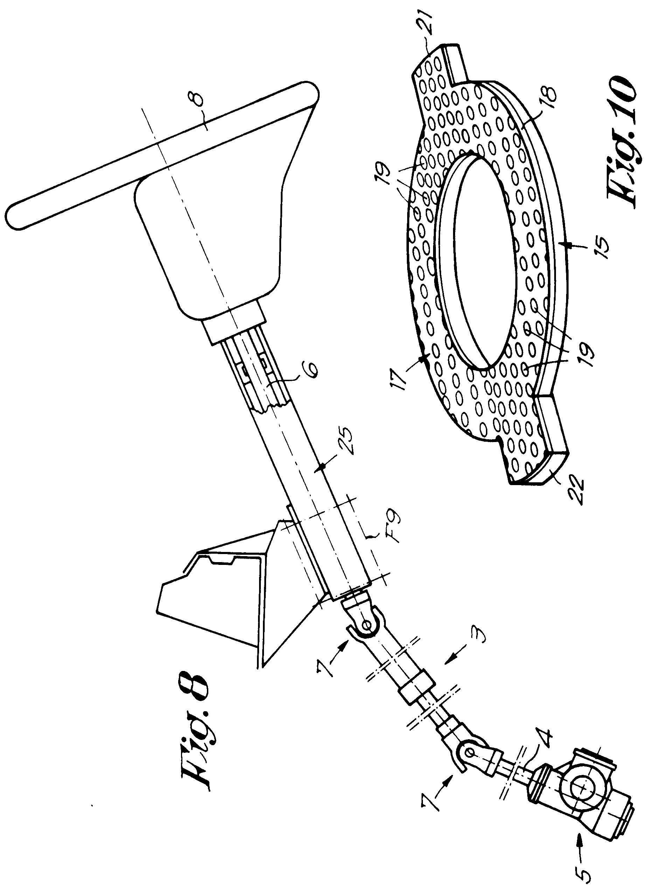

figure 10 shows a perspective view of the part indicated in figure 9 with F10.

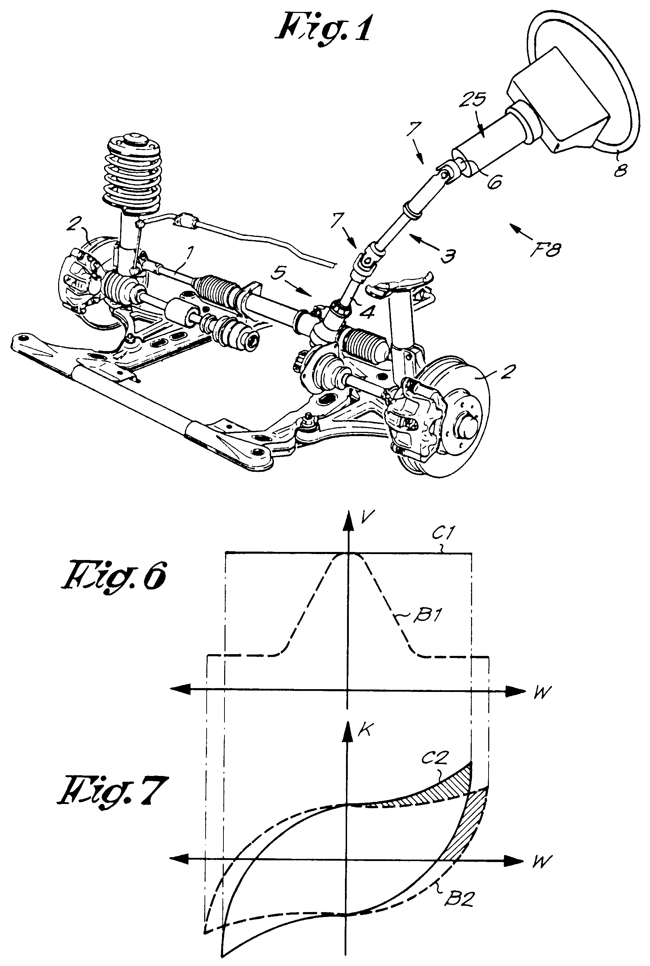

In the embodiment of figure 1 the steering-gear mainly consists of a cross rod 1 which is coupled to the wheels 2; an intermediate shaft 3 which usually consists of several parts; a pinion shaft 4 borne in the steering house 5; and a steering shaft 6, whereby these shafts are connected to one another by means of cardan couplings 7 and whereby the steering shaft 6 is provided at its free end with a steering wheel 8.

The transmission in the steering house 5 is formed by means of the interconnection between a pinion that is fixed on the pinion shaft 4 or forms one part with it and a steering rack coupled to the cross rod 1. Hereby, use can be made of a steering rack with a transmission ratio which is either or not variable.

Figures 2 to 5 are schematic representations of a steering rack 9 with a variable transmission ratio and a corresponding pinion 10. As shown in the figures 2, 4 and 5, the geometry of the gear teeth 11 is variable from the centre of the steering rack 9 towards the ends 12 and 13, whereby this variation is symmetrical with regard to the left and right direction. Said variation of the gear teeth geometry is related to the gear teeth direction A, as well as to the pressure angle of the gear teeth 11. In short, the transmission ratio of the steering rack is larger in the centre than near the ends 12 and 13. This results in a movement V of the cross rod 1 as a function of the angular rotation W of the steering wheel 8 as indicated by means of the curve B1 in figure 6. The couple K to be executed when parking as a function of said angular rotation W is shown in figure 7 by means of the curve B2.

In the case where a steering rack with a constant transmission ratio is used, the above-mentioned characteristics show a course as indicated by means of the curves C1 and C2.

When comparing the curves B2 and C2 it becomes clear that in the extreme positions a smaller couple K must be exercised in case a steering rack with variable transmission ratio is used.

A disadvantage however consists in that a transmission using a steering rack with variable gear teeth, due to the specific pressure angles, shows a relatively high steering house efficiency in the intermediate position, in proportion to a steering rack with a traditional gear teeth geometry, and as known this results in the effect that road bumps are felt more strongly at the steering wheel 8.

According to the invention, to compensate for said disadvantages a friction device 14 has been applied at the steering shaft 6, which as indicated in figure 9 consists of at least two cooperating friction elements 15 and 16, of which one, in this case the friction element 15, is locked to keep it from turning and the other, in this case the friction element 16, turns in conjunction with the steering shaft 6. According to the invention at least one of the friction elements, in this case the friction element 15, shows a contact area 17 which mainly consists of a synthetic-based material.

As shown in figure 10 a coating 18 can be used which consists of said material and which is applied on the friction element 15.

The material preferably consists of PTFE (polytetrafluoroethylene). Preferably, an amount of product consisting of fine metal-based particles is added to this material. Said product may consist of fine particles of metal or metal oxide.

Preferably, at least one of the friction elements shows a contact area provided with a number of recesses 19. As shown in figure 10 these recesses 19 are fitted in said coating 19. These recesses 19 hereby form little reservoirs for a lubricant.

The second friction element, in this case friction element 16, preferably has a metal contact area.

Said specific composition of the contact areas has the advantage that the caused friction is optimal in order to obtain that bumps are minimally passed on to the steering wheel 8; that the friction is almost constant during the complete life span of the vehicle; and that the friction does not have too high a starting value and causes almost no "stick-slip" behaviour.

In the shown example, the friction elements 15 and 16 consist of annular disks. The friction element 16 consists of a steel disk which is welded to the steering shaft.

The friction elements 15 and 16 are pressed together by means of flexible elements 20 preferably consisting of a helicoidal compression spring concentrically placed around the steering shaft 6.

As shown in figure 10 the friction element 15 has at least one, but preferably two lip-shaped protrusions 21 and 22 which make it possible to lock this friction element 15 so as to keep it from turning, but to mount it such that it can move axially. As shown in figure 9 these protrusions 21 and 22 fit in axial grooves or slits 23 and 24 which have been applied in an immobile part of the steering column 25.

Said immobile part consists for example of a bush 26 and is preferably mounted to the seating 27 of a bearing 28 of the steering shaft 6. In the shown example, the seating 27 consists of a flexible ring applied in the steering column 25. The bush 26 is locked to keep it from turning by means of ribs 29 which act onto the flexible material of the seating 27. These ribs 29 are pressed to the seating 27 by means of the spring 20.

It is obvious that the steering house 5, or at least the friction device 14, is preferably lubricated.

The working of the device can easily be deducted from figure 9. When turning the steering wheel 8 a certain friction force must be overcome. As a result of said friction, however, road bumps are less felt at the steering wheel 8. Due to the fact that the friction element 15 can shift axially, a certain adjustment in the shaft direction is possible, so that the force of the flexible elements 20 can be adjusted, depending on the position where the seating 27 and the friction element 16 are mounted around the steering shaft 6.

Although according to the invention, the steering-gear, and especially the friction device 14, proves to be most useful in front-wheel driven cars using a steering rack with variable gear teeth, it is clear that it can also be used for other vehicles.

The present invention is in no way limited to the embodiment described by way of example and shown in the accompanying drawings; on the contrary, such a steering-gear can be made in various forms and dimensions while still remaining within the scope of the invention.

**Claims**

1.  Steering-gear for vehicles, characterized in that at the height of the steering shaft (6) a friction device (14) has been installed consisting of at least two cooperating friction elements (15,16) of which one has been locked to keep it from turning and the other turns in conjunction with the steering shaft (6) and whereby at least one of said friction elements (15,16) has a contact area (17) which mainly consists of a synthetic-based material.

2. Steering-gear according to claim 1, characterized in that a metal-based product has been added to the synthetic material.

3. Steering-gear according to claims 1 and 2, characterized in that one of both friction elements (16) has a metal contact area.

4. Steering-gear according to any of the above claims, characterized in that the above-mentioned material has been executed in the form of a coating (18) that has been applied on the friction element (15).

5. Steering-gear according to any of the above claims, characterized in that at least one of the friction elements (15,16) has been provided with recesses (19) at its contact area.

6. Steering-gear according to claim 4, characterized in that the coating (18) has been provided with recesses (19).

7. Steering-gear according to any of the above claims, characterized in that the friction elements (15,16) consist of annular disks.

8. Steering-gear according to any of the above claims, characterized in that at least one of the friction elements (15,16) can be moved axially and that the friction elements (15,16) are pressed together by means of flexible means (20).

9. Steering-gear according to claim 8, characterized in that the flexible means (20) mainly consist of a helicoidal compression spring which has been mounted around the steering shaft (6).

10. Steering-gear according to any of the above claims, characterized in that the friction device (14) has been lubricated.

11. Steering-gear according to any of the above claims, characterized in that the friction element (15) which has been locked to keep it from turning can be moved axially and has been provided with at least one protrusion (21, 22) with which it acts onto an immobile part of the steering column (25).

12. Steering-gear according to claim 11, characterized in that the immobile part consists of a bush (26), which has been mounted around the steering shaft (6) and around the friction elements (15,16), whereby said bush (26) is clamped against the seating (27) of a bearing (28) of the steering shaft (6).

# Fig.1

# Fig.6

# Fig.7

*Fig. 2*

*Fig. 3*

*Fig. 5*

*Fig. 4*

*Fig. 9*

*Fig. 8*

*Fig. 10*

EP 0 497 409 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-8 601 168 (ZAHNRADFABRIK FRIEDRICHSHAFEN) <br><br>* the whole document * | 1,3,7,8, 11 | B62D7/22 |
| Y | | 2,4,6,9, 10,12 | |
| Y | PATENT ABSTRACTS OF JAPAN vol. 14, no. 127 (0947) 9 March 1990 & JP-A-01 320 329 ( SUMITOMO ELECTRIC IND. ) 26 December 1989 * the whole document * | 2 | |
| Y | PATENT ABSTRACTS OF JAPAN vol. 11, no. 188 17 June 1987 & JP-A-62 016 113 ( SUZUKI HIDEO ) 24 January 1987 * the whole document * | 4,6 | |
| Y | GB-A-941 680 (LEWIS) * page 2, line 55 - line 75; figures 1,2 * | 10 | |
| A | DE-U-7 417 609 (METABOWERKE) * page 2, paragraph 3; claim 9; figures * | 5 | TECHNICAL FIELDS SEARCHED (Int. Cl.5 ) <br><br> B62D <br> F16D |
| Y | GB-A-292 755 (ROYCE) * the whole document * | 9,12 | |
| A | GB-A-1 450 859 (NISSAN) * figures 1,7 * | | |

The present search report has been drawn up for all claims

| Place of search | Date of completion of the search | Examiner |
|---|---|---|
| THE HAGUE | 08 MAY 1992 | HAGEMAN M. |